# EUROPÄISCHE PATENTSCHRIFT

(11) **EP 2 246 944 B1**
(45) Veröffentlichungstag und Bekanntmachung des Hinweises auf die Patenterteilung: **05.08.2015**
(21) Anmeldenummer: 09158897.0
(22) Anmeldetag: 28.04.2009
(51) Int. Cl.: H01S 3/00, H01S 3/23, H01S 3/10, H01S 3/0941, H01S 3/067

(54) **Laserverstärker und Laserverstärkungsverfahren**
Laser amplifier and method of laser amplification
Amplificateur laser et procédé d'amplification par laser

(43) Veröffentlichungstag der Anmeldung: 03.11.2010
(73) Patentinhaber: High Q Laser GmbH, 6830 Rankweil (AT)
(72) Erfinder: Kopf, Daniel, A-6832 Röthis (AT); Aus der Au, Jürg, CH-9000 St. Gallen (CH)
(74) Vertreter: Harmann, Bernd-Günther

(56) Entgegenhaltungen:
- GB-A- 2 277 633
- US-A- 5 657 153
- US-A1- 2006 169 677
- US-A1- 2008 112 041
- US-A1- 2008 137 179

## Beschreibung

Die Erfindung betrifft eine Laserverstärkungsanordnung nach dem Oberbegriff von Anspruch 1 und ein Laserverstärkungsverfahren nach dem Oberbegriff des Anspruchs 12.

Ultrakurzpulslasersysteme, das heißt Laseranordnungen, die in der Lage sind, Laserpulse mit einer charakteristischen Pulsdauer im Femto- oder Pikosekundenbereich zu erzeugen, sind seit langem in verschiedenen Ausführungsformen aus dem Stand der Technik bekannt, wobei Femtosekunden- und Pikosekundenlaser in einer wachsenden Zahl von verschiedenartigen Anwendungen eingesetzt werden. Diese Anwendungen erfordern einerseits stets höhere Laserleistungen und Laserpulsenergien, andererseits erfordert die konkrete Anwendung oft die Möglichkeit, den Puls nahezu beliebig aus einem zugrunde liegenden Raster, d.h. aus einem Pulszug als Folge von vielen Einzelpulsen, ein- und auszuschalten. Hierfür sind sogenannte Pulspicker bekannt, die zumeist akusto-optische oder elektro-optische Schaltmechanismen verwenden. Jedoch sind diese bei höheren Leistungen von einigen 10 W nicht mehr problemlos verwendbar, da bei akusto-optischen Modulatoren aufgrund der erforderlichen Fokussierung eine zu hohe Spitzenleistung entsteht. Auch elektro-optische Modulatoren haben je nach verwendbarem Kristall eine Restabsorption, sodass ihr Einsatz bei einigen 10 W Durchschnittsleistung schon problematisch wird. Darüber hinaus ist die Handhabung von optischen Elementen, die justiert bzw. eingestellt werden müssen, bei derart hohen Leistungen recht aufwendig und fehleranfällig, so z.B. wenn der Auftreffpunkt des Strahl im Randbereich des opt. Elementes zu liegen kommt, was zu entsprechenden Schäden führen kann.

Eine Möglichkeit zur Umgehung dieser Probleme liegt in der Verstärkung von Pulsen geringerer Leistung, d.h. mit Leistungen unterhalb der problemerzeugenden Schwelle, durch Laserverstärkungsanordnungen. Dabei sind Leistungen von einigen 10 W oder sogar einigen 100 W keine Seltenheit mehr.

So können bei angeregten Lasermedien mit hohem Verstärkungsfaktor, d.h. mit einem Produkt von Wirkungsquerschnitt und Lebensdauer σ·τ als "Figure of Merit" (FOM) für die Kleinsignalverstärkung wie es bspw. Nd:Vanadat aufweist, auch bei einem einfachen Durchgang bei einer Pumpleistung von 100W immerhin gut 50% extrahiert werden. Ein entsprechender Ansatz ist beispielsweise aus der US 2005/0036532 A1 bekannt.

Andere Ansätze verwenden Mehrfachdurchgänge durch Materialien mit geringerem Verstärkungsfaktor. So kann mit insgesamt 9 Durchgängen durch Yb:YAG, wobei dieses ein schon deutlich kleineres σ·τ als Nd:Vanadat aufweist, trotzdem eine Verstärkung von ∼2W auf >400W erzielt werden, wobei somit bei einer Pumpleistung von 800W eine durchschnittliche Femtosekundenlaserleistung von über 400W erreicht wird.

Ein weiterer Ansatz besteht in der Verwendung von Faserlaserverstärkern, wobei hier ebenfalls Leistungen im Bereich von etlichen 10W oder etlichen 100W erreicht werden können. Allerdings ist für diesen Ansatz ein aufwendiges Chirped-Pulse-Amplification-Konzept erforderlich, um die Spitzenleistungen zur Vermeidung von Beschädigungen niedrig zu halten. In solchen Anordnungen besteht das Lasermedium bspw. aus Yb:Glas in Faserform, wobei dieses einen im Vergleich zu obigen Materialien nochmals geringeren Verstärkungsfaktor besitzt. Dadurch dass der Mode jedoch nicht divergiert, sondern aufgrund der Fasereigenschaft über eine Länge von etlichen 10cm oder sogar Metern konstant gehalten werden kann, z.B. in sogenannten LMA Large Mode Area Fibers mit 20 oder 30 µm Single-Mode Kerr-Durchmesser, kann die erzielte Verstärkung in der Summe trotzdem hoch sein, z.B. mit einem Faktor 100 pro Stufe.

Die aus dem Stand der Technik bekannten Ansätze weisen jedoch den Nachteil auf, dass die Kleinsignalverstärkung wesentlich höher als die - im konstanten Betrieb - vorherrschende gesättigte Verstärkung ist. Dadurch ergibt sich, dass beim Ausschalten des eingekoppelten Pulszuges eine deutlich höhere Verstärkung entsteht. Dies resultiert einerseits oft in einem "residuellen" oder "parasitären Lasing", d.h. dem Effekt einer unerwünschten, meist kontinuierliche Laserstrahlung aus dem Verstärker aufgrund von geringen Restreflexionen oder von ASE - Amplified Stimulated Emission. Andererseits ergibt sich aufgrund der entstandenen hohen Verstärkung aufgrund der hohen Inversion eine unverhältnismässig hohe Verstärkung für den ersten Puls beim Einschalten des eingekoppelten Pulszuges. Schliesslich kann die unverhältnismässig hohe Verstärkung den ersten Puls oder Pulszug zu hohen (Spitzen-) Intensitäten führen, die nahe bei der oder oberhalb der optischen Zerstörungsschwelle liegen.

Die GB 2 277 633 A offenbart eine Methode zur Bereitstellung eines bestimmten Verstärkungsniveaus in einem Lasermedium, so dass bei Auskopplung eines Nutzsignals dieses mit einer gewünschten Leistung vorliegt. Hierfür wird durch ein Umschalten zwischen einem eingekoppeltem Nutzsignal und einem eingekoppelten, abgeschwächten Hintersignal (während keine Strahlung als Nutzstrahlung ausgekoppelt wird) eine Verstärkung auch bei Vorliegen des Hintersignals beibehalten. "Parasitäres Lasing" wird dadurch verhindert.

Die US 2008/0137179 A1 offenbart die Verwendung von zwei Laserquellen zur Bereitstellung einer möglichst konstanten Ausgangsleistung für die Nachrichtentechnik. Das resultierende Ausgangssignal wird durch eingekoppelte Strahlung der zweiten Laserquelle (dummy laser) angepasst. Zur Steuerung der zweiten Laserquelle wird ein Teil des Eingangssignals auf eine Photodiode zur Bestimmung aktueller Eingangsparameter geführt.

Die US 5,657,153 beschreibt ein Lasersystem für den Einsatz in z.B. Laserdruckern mit Ausgangsleistungen in der Grössenordnung von ca. 1 W. Zur Bereitstellung eines stabilen Outputs wird die abwechselnde Einkopplung von zwei unterschiedlichen Signalen in ein gemeinsames Lasermedium vorgeschlagen, wobei vorzugsweise nur eines der verstärkten Signale als Nutzsignal verwendet wird.

Bisherige Ansätze zur Berücksichtigung dieser Effekte erfordern aufwendige sog. "First-Pulse-Suppression"-Maßnahmen, bei denen der erste eingekoppelte Puls stark abgeschwächt wird, um im Endeffekt wieder die gewünschte Pulsenergie zu erhalten.

Aus der US 2008/0112041 ist ein Konzept mit zwei Resonatoren bekannt, bei dem mittels eines zweiten, winkelgemultiplexten Resonators, der durch das gleiche Lasermedium führt, sichergestellt wird, dass im ausgeschalteten Zustand der Verstärkerstufe der zweite Resonator läuft und die Inversion im Lasermedium gering hält. Hierdurch kann zwar die zu hohe Verstärkung beim Einkoppeln des zu verstärkenden Pulses vermieden werde, allerdings erfordert diese Anordnung den Betrieb eines zweiten Laserresonators.

In der US 6,009,110 wird ein Konzept mit aufwendiger Regelelektronik vorgestellt, bei dem ein gütegeschalteter Laser im ausgeschalteten Zustand der Verstärkerstufe dennoch im kontinuierlichen Laserbetrieb läuft und dadurch die Inversion im Verstärker ebenfalls gering gehalten wird. Beim erneuten Einschalten des Q-Switch-Betriebes erfolgt dann ein vermindertes Überschiessen der Leistung des ersten Pulses. Aufgrund der verwendeten nachgeschalteten Frequenzkonversion fällt die kontinuierliche Laseremission nicht ins Gewicht, was aber in anderen Anwendungen nachteilig ist.

Eine Aufgabe der vorliegenden Erfindung besteht in der Bereitstellung einer verbesserten Laserverstärkungsanordnung bzw. einem verbesserten Laserverstärkungsverfahren zur Erzeugung von Femto- oder Pikosekundenpulsen.

Eine weitere Aufgabe besteht in der Bereitstellung einer solchen Laserverstärkungsanordnung, welche bei geringer Komplexität des Aufbaus und des Betriebs einer Pulsverstärkung vor- und nachlaufende Effekte im Verstärkermedium verringert oder unterdrückt.

Eine weitere Aufgabe besteht in der Bereitstellung einer Laserverstärkungsanordnung bzw. einem verbesserten Laserverstärkungsverfahren zur Erzeugung von Femto- oder Pikosekundenpulsen, welche den Betrieb mit niedrigen Pulsrepetitionsraten ermöglicht, ohne an die optische Zerstörungsschwelle zu gelangen.

Eine weitere Aufgabe besteht in der Bereitstellung einer Laserverstärkeranordnung mit erhöhter Kompaktheit und Robustheit.

Eine weitere Aufgabe besteht in der Bereitstellung einer Laserverstärkeranordnung mit einer Funktion zur wahlfreien Auskopplung eines Pulses bei einer weitgehenden Unterdrückung des Erstpulses.

Diese Aufgaben werden durch die Gegenstände des Anspruchs 1 bzw. 12 oder der abhängigen Ansprüche gelöst bzw. die Lösungen weitergebildet.

Die Erfindung betrifft eine Laserverstärkungsanordnung bzw. ein Laserverstärkungsverfahren, zur Verstärkung von Femto- oder Pikosekundenpulsen, mit einem Lasermedium zur Erzeugung einer verstärkten Laseremission, wobei diese typischerweise eine Durchschnittsleistung von mehr als 10 W oder mehr als 100 W aufweisen kann. Dabei wird ein zu verstärkendes Nutzsignal, d.h. in der Regel ein aus einem Pulszug ausgekoppelter Einzelpuls oder eine begrenzte Zahl von Einzelpulsen, durch ein von einer Pumpquelle, insbesondere einer Laserdiodenquelle, optisch gepumptes Lasermediums geführt. Die zeitliche Taktung und Schaltung des Vorgangs erfolgt dabei durch eine Schaltkomponente, welche zum optischen Einkoppeln des Nutzsignals in das Lasermedium dient.

Die erfindungsgemässe Lösung beruht auf dem Ansatz, die Emission der zur Erzeugung der Pulse verwendeten Quelle auch zur Kontrolle der Inversion und damit der Verstärkung des Lasermediums zu nutzen. Hierfür wird aus der in die Verstärkeranordnung geführten Eingangsstrahlung ein Hintergrundsignal erzeugt, das im ausgeschalteten Zustand der Verstärkungsfunktion, d.h. in einer Zeit, während der kein Nutzsignal verstärkt werden soll, für eine Kontrolle der Inversion im Lasermedium und damit des Verstärkungsfaktors genutzt wird. Durch das Hintergrundsignal kann das Lasermedium durchgehend in einem definierten, gesättigten Zustand gehalten werden, in den dann das Nutzsignal zur Verstärkung eingekoppelt wird, so dass die sonst auftretenden Überhöhungen des ersten Pulses vermieden werden. Dabei dient das Eingangssignal sowohl als Quelle der Hintergrundstrahlung wie auch zur Bereitstellung des zu verstärkenden Nutzsignals. Durch diesen Ansatz können verstärkte Pulse jederzeit und auf Abruf ausgekoppelt werden, ohne dass aufwendige Regulierungen oder Steuerungen erforderlich werden. Dabei ist das erfindungsgemässe Konzept auf eine Vielzahl von Verstärkertypen anwendbar, so z.B. auf Ein- oder Mehrfachdurchgänge durch verschiedene Geometrien und Medien, insbesondere auch in Faserverstärkerstufen.

Erfindungsgemäss sind Lasermedium und Schaltkomponente so ausgebildet und angeordnet, dass durch das Hintergrundsignal ein Sättigungszustand des Lasermediums bewirkt wird, wobei das Nutzsignal bei Vorliegen des Sättigungszustandes in das Lasermedium eingekoppelt wird. Dabei kann die Leistung des Eingangssignals entweder vollständig oder in einem Verhältnis, z.B. mit einer Aufteilung in 80 % und 20 % der Leistung des Eingangssignals, zwischen Nutzsignal oder Hintergrundsignal hin- und hergeschaltet werden, wobei in beiden Fällen die Summe der Leistungen von Nutz- und Hintergrundsignal konstant ist und der des Eingangssignals entspricht. So kann beispielsweise während des ausgeschalteten Zustands die gesamte Leistung des Eingangssignals als Hintergrundsignal über einen ersten Strahlgang in das Lasermedium geführt werden, wodurch hier eine Sättigung bewirkt wird. Das im Lasermedium verstärkte Hintergrundsignal kann nachfolgend in eine optische Falle geführt werden, so dass kein Laserlicht das Verstärkersystem verlässt.

Zum Verstärken eines Nutzsignals wird das Eingangssignal nunmehr als Nutzsignal über einen zweiten, anderen Strahlgang geführt, der ebenfalls durch das Lasermedium verläuft, jedoch nachfolgend als nutzbare Emission den Verstärker verlässt, d.h. im Gegensatz zum verstärkten Hintergrundsignal nicht in eine optische Falle geführt wird. Da in beiden Fällen das gleiche Eingangssignal verwendet wird, sind die Eigenschaften der Strahlung in beiden Fällen im Wesentlichen identisch. Zudem kann der Umschaltvorgang durch eine einzige Komponente bewirkt werden, so dass notwendigerweise eine Synchronisierung erfolgt, ohne dass eine komplexe und aufwendige Realisierung und Steuerung von zwei Strahlungsquellen bzw. Resonatoren erforderlich ist.

Neben der vollständigen Umschaltung der Leistung des Eingangssignals zwischen Hintergrund- und Nutzsignal kann auch eine Aufteilung der Leistung auf beide Signale erfolgen, so dass stets eine gewisse Minimalleistung jedes Signals anliegt. Durch den Umschaltvorgang bzw. den Einkopplungsvorgang des Nutzsignals in das Lasermedium wird das Verhältnis invertiert.

Geeignete Schaltkomponenten stehen in Form von elektrooptischen und akusto-optischen Modulatoren zur Verfügung, wobei eine Trennbarkeit der beiden Signale anhand der Polarisation, der Strahlrichtung und/oder ihres Austrittswinkels bei Verlassen der Schaltkomponente gewährleistet wird. Wird eine unterschiedliche Polarisation der beiden Signale verwendet, so können diese zumindest teilweise über einen gemeinsamen Strahlgang geführt werden, wodurch die Laseranordnung an Einfachheit des Aufbaus gewinnt. Die beiden Strahlgänge können auch teilweise identischen räumlichen Verlauf aufweisen, soweit eine Trennung bzw. Trennbarkeit ihrer beiden unterschiedlichen Signale innerhalb des Lasermediums möglich ist. Diese Trennbarkeit kann bspw. durch einen unterschiedlichen räumlichen Verlauf, gegenläufige Strahl- bzw. Ausbreitungsrichtungen, unterschiedliche Frequenz und/oder durch unterschiedliche Polarisationsrichtungen oder anhand weiterer Strahlparameter erfolgen.

Insbesondere besteht eine Eignung für einen modengekoppelten oder durch Güteschaltung modengekoppelten Pulszug eines Femtosekunden- oder Pikosekundenlasers, aus welchem dann einzelne Pulse oder auch definierte Pulsabfolgen mit einem vorgegebenen, zeitlichen Energieprofil als Nutzsignal verwendet werden.

Die erfindungsgemässe Laserverstärkungsanordnung bzw. das erfindungsgemässe Laserverstärkungsverfahren werden nachfolgend anhand von in der Zeichnung schematisch dargestellten Ausführungsbeispielen rein beispielhaft näher beschrieben oder erläutert. Im einzelnen zeigen
- Fig.1: die schematische Darstellung eines ersten Ausführungsbeispiels der erfindungsgemässen Laserverstärkungsanordnung;
- Fig.1A: die schematische Darstellung eines ersten Beispiels für ein geteiltes Lasermedium für das erste Ausführungsbeispiel;
- Fig.1B: die schematische Darstellung eines zweiten Beispiels für ein geteiltes Lasermedium für das erste Ausführungsbeispiel;
- Fig.2: die schematische Darstellung eines zweiten Ausführungsbeispiels der erfindungsgemässen Laserverstärkungsanordnung;
- Fig.3: die schematische Darstellung eines dritten Ausführungsbeispiels der erfindungsgemässen Laserverstärkungsanordnung;
- Fig.4: die schematische Darstellung eines vierten Ausführungsbeispiels der erfindungsgemässen Laserverstärkungsanordnung;
- Fig.5: die schematische Darstellung eines fünften Ausführungsbeispiels der erfindungsgemässen Laserverstärkungsanordnung;
- Fig.6: die schematische Darstellung eines sechsten Ausführungsbeispiels der erfindungsgemässen Laserverstärkungsanordnung;
- Fig.7: die schematische Darstellung eines siebten Ausführungsbeispiels der erfindungsgemässen Laserverstärkungsanordnung;
- Fig.8: die schematische Darstellung eines achten Ausführungsbeispiels der erfindungsgemässen Laserverstärkungsanordnung und
- Fig.9: die schematische Darstellung eines neunten Ausführungsbeispiels der erfindungsgemässen Laserverstärkungsanordnung.

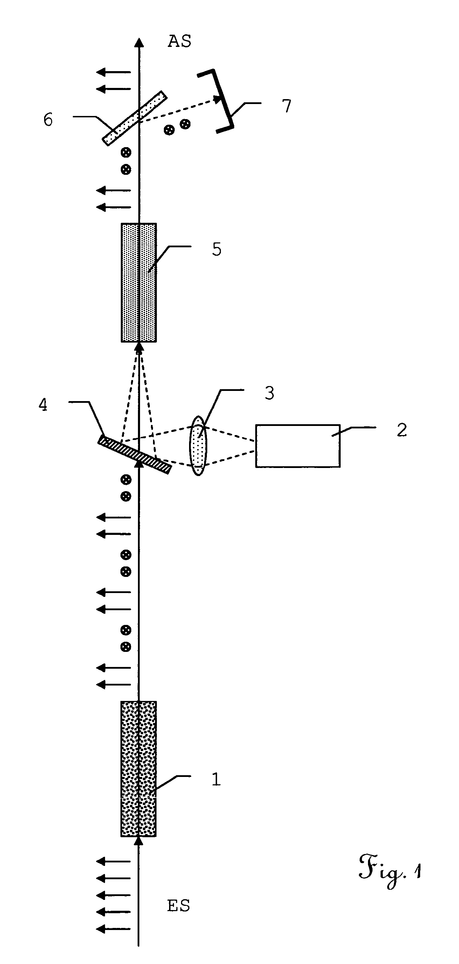

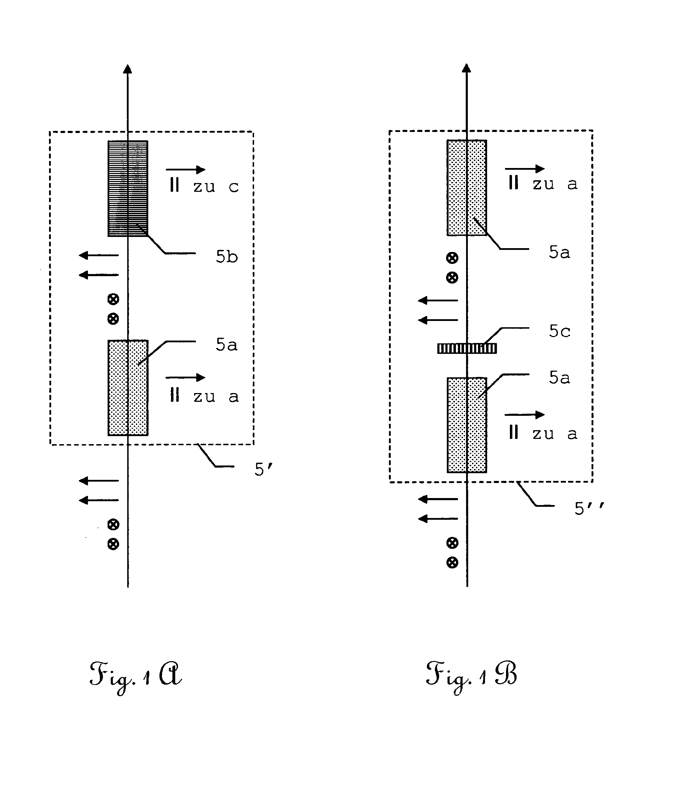

Fig.1 zeigt die schematische Darstellung eines ersten Ausführungsbeispiels der erfindungsgemässen Laserverstärkungsanordnung mit einem Lasermedium 5 zur Erzeugung einer verstärkten Laseremission AS aus einem zu verstärkenden Nutzsignal. Das Lasermedium wird durch eine Pumpquelle 2, insbesondere eine Laserdiodenquelle, gepumpt. Die Strahlung der Pumpquelle 2 wird über eine Linse 3 und einen dichroitischen Strahlteiler 4 in den gemeinsamen Strahlgang von hintergrund- und Nutzsignal eingekoppelt, so dass das Lasermedium 5 in diesem Beispiel durch seine Stirnfläche gepumpt wird.

Ein elektro-optischer Modulator wird als Schaltkomponente 1 zum Einkoppeln des zu verstärkenden Nutzsignals in das Lasermedium 5 verwendet, indem die Polarisationsrichtung des Eingangssignals ES gedreht wird. So kann die Polarisation des in die Verstärkeranordnung eingekoppelten Eingangssignals ES durch Variation der an der Schaltkomponente 1 angelegten Spannung nach Bedarf verändert werden, z.B. von p-polarisiert bei einer angelegten Spannung von Null auf s-polarisiert bei entsprechend angelegter Halbwellenlängenspannung. Gemeinsam mit einem nachgeschalteten Polarisator würde eine gängige sog. Pulsepicker-Anordnung resultieren. Solche Anordnungen verwenden z.B. Beta-Bariumborat (BBO) als Material für den elektro-optischen Modulator bzw. eine "Pockelszelle" und einen Dünnfilmpolarisator oder einen polarisierenden Strahlteilerwürfel als nachgeschaltetes Polarisatorelement. Eine geeignete Hochspannungselektronik kann Hochspannungspulse zum Schalten bis zu 1 MHz oder auch höhere Pulspicking-Rate erreichen, je nach Ausführung und erforderlicher Spannung. Letzteres hängt wesentlich von der Kristallhöhe oder -länge ab, je nachdem, ob die Spannung longitudinal oder transversal angelegt wird, und somit auch von der möglichen Fokussierung. Hier wird zudem erkennbar, dass bei sehr hohen Leistungen von mehreren 10 oder Hunderten von Watt eine Grenze der Pulswiederholrate schneller erreicht wird, und somit das Puls-Picking vor dem Verstärker nicht nur bzgl. der einfacheren Handhabung geringerer Leistungen sondern auch bzgl. der erzielbaren Pulsschaltfrequenz Vorteile hat. Durch die Hin- und Herschaltung zwischen den Polarisationszuständen wird das Eingangssignal ES bei bis zum Lasermedium 5 bzw. Dünnfilmpolarisator 6 gemeinsamen Strahlgang einmal als Nutzsignal und einmal als Hintergrundsignal genutzt. Erfindungsgemäss wird damit die wahlweise p- oder s-polarisierte Inputlaserstrahlung nicht vor der Verstärkeranordnung bzw. dem Lasermedium 5 getrennt sondern erst danach. Die hier verwendete Bezeichnungen P-(parallele)- und s-(sagittale)-Polarisation entspricht terminologisch auch der üblichen Bezeichnung von h-(horizontaler)- und v-(vertikaler)-Polarisation.

Anstelle eines elektro-optischen Modulators kann erfindungsgemäss auch ein akusto-optischer Modulator verwendet werden, bei dem die nullte und die erste Ordnung unterschiedliche Polarisationen aufweisen.

Polarisierende Strahlteileroptiken sind für sehr hohe Leistungen bei grossen Aperturen erhältlich, sodass deren Verwendung auch bei einigen 100W kein technisches Problem darstellt und auch leicht durchzuführen ist.

Bei der Wahl des Laserverstärkers ist darauf zu achten, dass beide Polarisationen s und p im Lasermedium 5 geführt werden und für ein erwünschtes Abtragen der Inversion sorgen. Im Falle von Laserkristallen als Lasermedium 5 kann einerseits die Orientierung so gewählt werden, dass die beiden Polarisationsrichtungen den gleichen Sättigungseffekt haben, d.h. den gleichen Wirkungsquerschnitt σ (und die gleiche Lebensdauer) oder es kann als ein Kompromiss realisiert werden, dass bei unterschiedlichen Wirkungsquerschnitten σ für eine der beiden Polarisationsrichtungen keine komplette sondern zumindest eine bestmögliche Unterdrückung des Erstpulsproblems erreicht wird. Dies ist zum Beispiel bei Nd:Vanadat der Fall, wo mit Vorteil die Polarisation entlang der c-Achse verläuft, da diese am besten verstärkt wird. Dann verläuft jedoch die andere Polarisationsrichtung zwangsläufig entlang einer der beiden anderen a-Achsen und erfährt eine geringere Verstärkung und Sättigung. Alternativ kann jedoch auch eine Kristallorientierung gewählt werden, bei der beide Polarisationen entlang einer a-Achse verlaufen. Durch das Hintergrundsignal wird somit ein Sättigungszustand des Lasermediums 5 bewirkt, wobei das Nutzsignal bei Vorliegen dieses Sättigungszustandes durch das Umschalten der Polarisation in das Lasermedium 5 eingekoppelt wird. In beiden Zuständen wird das Lasermedium 5 somit in einem im wesentlichen gleichen Sättigungszustand betrieben.

Damit liegt nach der Schaltkomponente 1 je nach Schaltzustand eine horizontale oder vertikale Polarisation, bzw. eine p- oder s-Polarisation vor. Aufgrund dieser Auslegung und der gewählten Abfolge sind Lasermedium 5 und Schaltkomponente 1 so ausgebildet und angeordnet, dass eine Aufteilung eines Eingangssignals ES in das Nutzsignal und ein Hintergrundsignal mit unterschiedlichen Polarisationen erfolgt, wobei durch eine entsprechende Ansteuerung der Schaltkomponente 1 das Hintergrundsignal zeitlich unmittelbar vor und/oder nach dem Einkoppeln des zu verstärkenden Nutzsignals durch das Lasermedium 5 geführt werden kann. Im Gegensatz zu herkömmlichen Pulspicker-Anordnungen ist der zur Signaltrennung verwendete Dünnfilmpolarisator 6 erfindungsgemäss nach dem Lasermedium 5 angeordnet. Je nach Schaltzustand der Schaltkomponente 1 und damit der Polarisationsrichtung wird das nunmehr als Nutzsignal dienende Eingangssignal ES nach seiner Verstärkung als Ausgangssignal AS aus der Anordnung ausgekoppelt oder aber bei anderer Polarisation als Hintergrundsignal in eine optische Falle 7 geführt.

In den Fig. 1A und 1B werden zwei Beispiele für ein geteiltes Lasermedium dargestellt, welche in erfindungsgemässen Laserverstärkungsanordnungen verwendet werden können. Das Konzept der Aufteilung des Lasermediums stellt jedoch eine Lösung dar, die unabhängig von der erfindungsgemässen Laserverstärkungsanordnung bzw. dem erfindungsgemässen Laserverstärkungsverfahren auch in anderen Anordnungen und Verfahren zum Einsatz kommen kann, insbesondere in Ultrakurzzeitpulslasersystemen. Solche Laser- bzw. Laserverstärkungsanordnungen weisen typischerweise neben dem Lasermedium eine Pumpanordnung zum optischen Pumpen des Lasermediums, Schaltkomponenten zum Ein- oder Auskoppeln von Laserpulsen sowie - je nach Auslegung - unter Umständen auch einen Resonator auf. Insofern sind diese Auslegungen von Lasermedien unabhängig von der dargestellten Erfindung.

Die Aufgabe dieser speziellen Ausgestaltung besteht darin, für Lasermedien mit Anisotropie eine angepasste Leistungsaufnahme für zwei oder mehr Signale mit hinsichtlich der bestehenden Anisotropie unterschiedlichen Charakteristika bzw. Signalparametern zu ermöglichen. Hierbei kann sowohl die Leistungsaufnahme in beiden Komponenten gleich ausgelegt aber auch bewusst unterschiedlich gehalten werden.

Hierzu weist das Lasermedium wenigstens zwei Komponenten aus laserverstärkendem Material auf, wobei in einer ersten, in Fig. 1A dargestellten Variante die wenigstens zwei Komponenten gegenseitig mit ihrer Anisotropierichtung, d.h. der Richtung, bezüglich derer eine solche Anisotropie besteht, unterschiedlich orientiert, insbesondere verdreht sind.

Eine andere, in Fig. 1B dargestellte Variante basiert zwar ebenfalls auf der Trennung des Lasermediums in wenigstens zwei Komponenten, verwendet jedoch eine optische Komponenten, um den durch das Lasermedium geführten Strahlgang der beiden Signale zwischen der ersten und der zweiten Komponente in seiner bezüglich der Anisotropie wirksamen Richtung zu verändern, insbesondere zu verdrehen.

Beide Ansätze, d.h. die Verdrehung bzw. Veränderung der Komponenten bei unverändertem Strahlgang der Signale oder die Verdrehung bzw. Veränderung des Strahlgangs bei unveränderter Anisotropierichtung der Komponenten, können jedoch auch kombiniert werden, indem sowohl Strahlgang als auch Anisotropierichtung zwischen den Komponenten des Lasermediums verändert werden. So kann bspw. auch bei einem dreiteiligen Lasermedium zwischen den ersten beiden Komponenten an der ersten Teilung die Signalorientierung, z.B. die Polarisationsrichtungen, durch Änderung des Strahlgangs verdreht werden und zwischen den letzten beiden Komponenten an der zweiten Teilung die Anisotropierichtung der zweiten und dritten Komponente geändert werden. Ebenso kann auch in einer Teilung, d.h. an einer Übergangsstelle zwischen zwei Komponenten sowohl die Signalorientierung als auch die der Komponenten zugleich verändert werden.

Ergänzend kann für die Komponenten des Lasermediums eine unterschiedliche Dotierung oder Länge bzw. Geometrie gewählt werden. Durch diese hierdurch bereitgestellten Freiheitsgrade kann eine gewünschte Leistungsaufnahme bzw. ein Sättigungsverhalten über das Lasermedium oder seine Komponenten eingestellt werden.

Im Folgenden wird in den Fig. 1A und 1B rein exemplarisch eine zweiteilige Ausführungsform des Lasermediums für polarisationsgetrennte Strahlgänge, d.h. einen räumlich gemeinsamen Strahlgang mit Signalanteilen unterschiedlicher Polarisationsrichtungen, erläutert.

Fig.1A zeigt die schematische Darstellung eines ersten Beispiels für ein geteiltes Lasermedium 5' für das erste Ausführungsbeispiel. In diesem Beispiel wird als Material für das Lasermedium 5' Nd:Vanadat verwendet, wobei zwei identische Komponenten 5a und 5b nacheinander angeordnet sind, wobei allerdings eine unterschiedliche Orientierung erfolgt. Die erste Komponente 5a ist in diesem Fall mit der Anisotropierichtung parallel zur p-Polarisierung und die zweiten Komponente parallel zur s-Polarisierung ausgerichtet. Damit wird unabhängig vom Schaltzustand, d.h. der Drehung der Polarisationsrichtungen, eine gleichbleibende Sättigung bzw. eine Verringerung oder Verhinderung des unterschiedlichen Sättigungsverhaltens der beiden Polarisationsrichtungen bewirkt.

Hierbei erfolgt somit ein Wechsel der Orientierung des Kristalls nach einer gewissen Länge, d.h. z.B. nach der ersten Hälfte oder dem ersten Drittel. Bis dorthin ist der Kristall so orientiert, dass die c-Achse horizontal liegt und die a-Achse vertikal, und danach umgekehrt. Diese Anordnung zweier separater Laserkristallteile kann in getrennter Weise, bevorzugt mit einer Antireflexschicht-Schicht zwischen den Komponenten, oder auch durch eine Verbindung zu einem einzigen Teil realisiert werden. Eine solche Verbindung, ggf. ebenfalls mit einer Antireflexschicht, lässt sich durch Bonding-Techniken des Stands der Technik bewerkstelligen, wie z.B. Diffusionsbonding, optisches Bonding etc., wodurch der Kristall immer noch ein einzelnes optisches Element darstellt.

Fig.1B zeigt die alternative Variante des Lasermediums 5" mit einer Drehung der Polarisationsrichtung zwischen den identischen und gleich ausgerichteten Komponenten 5a als ein zweites Beispiel für ein geteiltes Lasermedium 5" für das erste Ausführungsbeispiel der Laserverstärkeranordnung. Hierbei wird zwischen die beabstandet angeordneten und gleich ausgerichteten Komponenten 5a ein die Drehung der Polarisationsrichtungen bewirkendes Element 5c angeordnet. Auch diese Variante kann in einem monolithischen Aufbau durch eine Verbindung der Komponenten 5a mit einer polarisationsdrehenden Schicht zwischen den Kristallteilen verwirklicht werden.

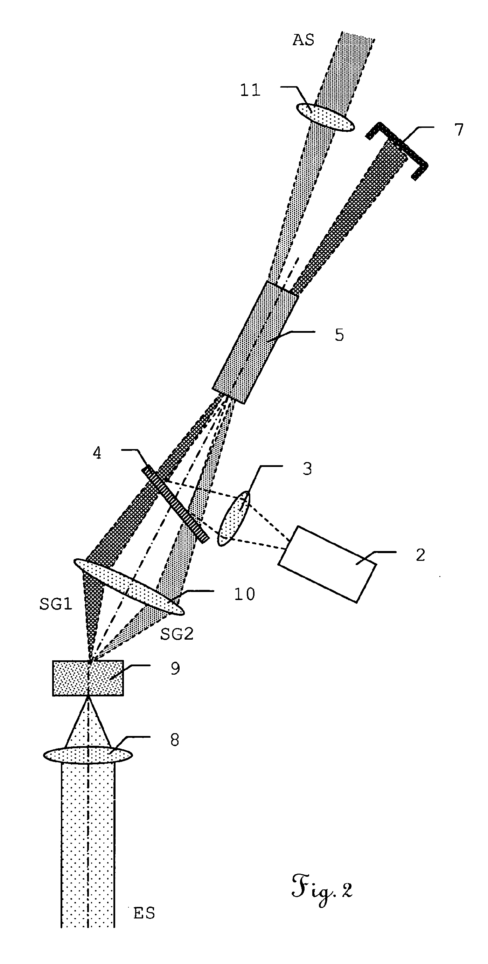

Ein zweites Ausführungsbeispiel der erfindungsgemässen Laserverstärkungsanordnung wird in Fig. 2 erläutert. In diesem Beispiel wird anstelle eines elektro-optischen Modulators ein akusto-optischer Modulator als Schaltkomponente 9 verwendet, so dass Nutzsignal und Hintergrundsignal nach dem Modulator anhand ihrer Austrittswinkel voneinander trennbar sind. Das Eingangssignal ES wird über eine Linse 8 in den akusto-optischen Modulator eingekoppelt, wobei dieser durch zwei Schaltzustände mit unterschiedlichen Austrittswinkeln aus der Schaltkomponente 9 zwei getrennte Strahlgänge SG1 und SG2 für Hintergrund- und Nutzsignal definiert. Im ersten Schaltzustand wird das Eingangssignal ES als Hintergrundsignal in einem ersten Strahlgang SG1 über eine Linse 10 und einen zur Einkopplung des von der Pumpquelle 2 stammenden Pumplichts dienenden dichroitischen Strahlteiler 4 in das Lasermedium 5 geführt, wo eine Sättigung bewirkt wird. Nach Verlassen des Lasermediums 5 wird das verstärkte Hintergrundsignal in eine im ersten Strahlgang SG1 befindliche optische Falle 7 geführt.

Durch Umschalten der Schaltkomponente 9 in den anderen Schaltzustand wird das Eingangssignal ES nunmehr als Nutzsignal über den Strahlgang SG2 in das Lasermedium 5 geführt. Dieser weist ebenfalls Linse 10 und dichroitischen Strahlteiler 4 auf, allerdings wird das verstärkte Nutzsignal nach Verlassen des Lasermediums 5 über eine kollimierende Linse 11 geführt und als Ausgangssignal AS aus der Anordnung emittiert. Es ist in dieser Anordnung vorteilhaft, beide Laserstrahlen mit möglichst geringem Winkelabstand durch den angeregten Teil des Lasermediums zu schicken, so dass innerhalb des Lasermediums 5 im wesentlichen die gleichen Bereiche durch die beiden Strahlgänge SG1 und SG2 erfasst werden.

In einer Variante kann die Anordnung erfindungsgemäss jedoch auch so ausgelegt werden, dass das Eingangssignal nicht nur vollständig in einen von zwei alternativen Strahlgängen geführt wird, sondern dass eine Aufteilung der Leistung auf die verschiedenen Strahlgänge erfolgt, so dass dazwischen liegende graduelle Zustände, z.B. mit 20 % Leistung des Eingangssignals ES im Nutzsignal und 80 % Leistung im Hintergrundsignal. Beim Schalten zur Emission des verstärkten Ausgangssignals würde dann dieses Verhältnis umgekehrt, d.h. mit 80 % Leistung des Eingangssignals ES im Nutzsignal und 20 % Leistung im Hintergrundsignal.

Auch in diesem Beispiel wird wie in Fig. 1 das Pulspicking wieder vor dem Lasermedium 5 als verstärkendem Element durchgeführt.

Anstelle eines akusto-optischen Modulators kann erfindungsgemäss auch ein elektro-optischer Deflektor verwendet werden, der bei Anlegen einer Spannung den Austrittswinkel des austretenden Strahls verändert.

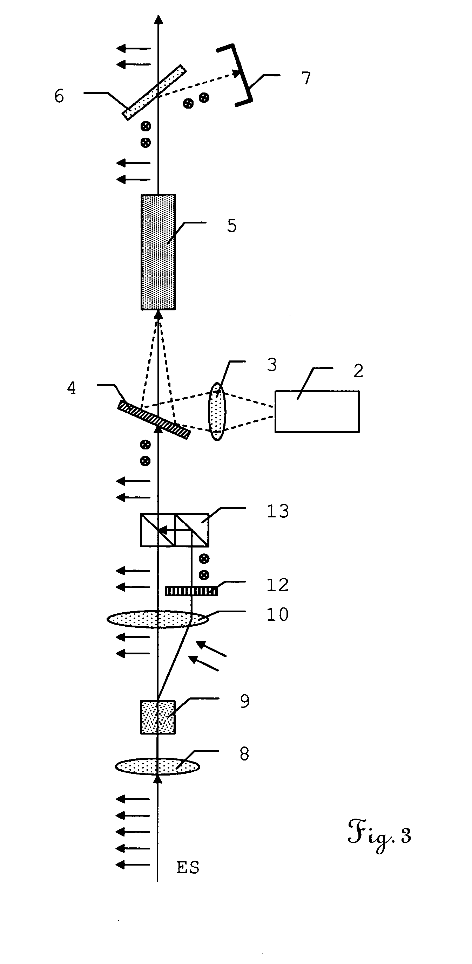

In Fig.3 erfolgt die schematische Darstellung eines dritten Ausführungsbeispiels mit einem akusto-optischen Modulator als Schaltkomponente 9' und polarisationsabhängiger Trennung von Nutz- und Hintergrundsignal. Auch in diesem Beispiel wird das Eingangssignal ES über eine Linse 8 in einen akusto-optischen Modulator als Schaltkomponente 9' geführt, wobei dieser wiederum zwei Strahlgänge mit unterschiedlichen Austrittswinkeln definiert. In einem der beiden Strahlgänge ist der Schaltkomponente 9 ein Halbwellenlängenplättchen 12 nachgeordnet, so dass durch dieses die Polarisation des über diesen Strahlgang geführten Signals gedreht wird. Nach dem Halbwellenlängenplättchen 12 werden beide Strahlgänge von Nutzsignal und dem Hintergrundsignal über eine Element 13 aus Spiegel und Strahlteilerwürfel wieder zusammengeführt, so dass die folgende Anordnung dem Beispiel aus Fig. 1 entspricht und nach dem Lasermedium 5 eine Trennung von Nutz- und Hintergrundsignal anhand ihrer unterschiedlichen Polarisation durch einen Dünnfilmpolarisator 6 möglich ist. In diesem Beispiel wird das Hintergrundsignal über das Halbwellenlängenplättchen 12 geführt und in der Polarisationsrichtung gegenüber der Anfangspolarisation geändert. Allerdings kann erfindungsgemäss auch das Nutzsignal über diesen Strahlgang geführt werden, wobei dann das Hintergrundsignal direkt und ohne Polarisationsänderung in das Lasermedium 5 geführt wird.

Dieses dritte Ausführungsbeispiel verkörpert eine Kombination der beiden oben genannten Ausführungsbeispiele aus Fig. 1 und Fig. 2: Zum einen wird für das Puls-Picking der technisch einfachere akusto-optische Modulator verwendet, zum anderen werden danach beide Signale, d.h. sowohl das Nutzsignal als auch das Hintergrundsignal, mittels Polarisationskopplung übereinander gelegt. Dadurch ergibt sich der Vorteil einer einfacheren elektronischen Anordnung einerseits und der Möglichkeit der flexiblen Verwendung aller oben genannten Verstärkeranordnungen, sofern Sie beide Polarisationsrichtungen verstärken. Die Trennung erfolgt sodann wiederum mittels polarisierendem Strahlteiler bzw. in diesem Beispiel mittels Dünnfilmpolarisator 6 nach dem Lasermedium 5 als Verstärkerstufe oder ggf. auch am Ende mehrerer solcher Verstärkerstufen.

Bei dieser Anordnung ist es auch möglich, durch geeignete und dem Fachmann bekannte Ausführung des optischen Systems, mit welchem die beiden Strahlen mittels Polarisationskopplung übereinandergelegt werden, bei einem der beiden polarisierten Signale bzw. Strahlgänge einen größeren oder kleineren Strahldurchmesser einzustellen, um einen allfälliges geringeren Wirkungsquerschnitt σ für die jeweilige Polarisationsrichtung zu kompensieren und die gleiche oder annähernd die gleiche Sättigung wie für die andere Polarisationsrichtung zu erzielen.

Ebenso ist es möglich, durch geeignete und dem Fachmann bekannte Ausführung des optischen Systems bei einem der beiden polarisierten Signale bzw. Strahlgänge eine Abschwächung einzubauen (Attenuation), um den Effekt eines allfälligen höheren Wirkungsquerschnitt σ für die jeweilige Polarisationsrichtung zu kompensieren und im Ergebnis wiederum eine konstante, vom Schaltzustand weitgehend unabhängige Inversion in der Verstärkerstufe zu erhalten.

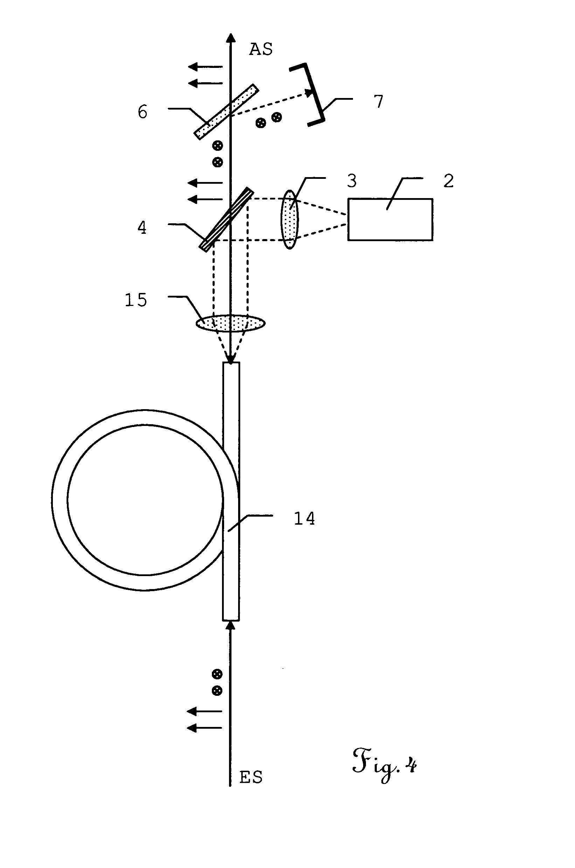

Fig.4 zeigt die schematische Darstellung eines vierten Ausführungsbeispiels als Laserfaserverstärker mit einer Faser als Lasermedium 14, die durch eine Pumpquelle 2 mit einer Optik aus zwei Linsen 3 und 15 sowie einem dichroitischen Strahlteiler 4 von einer Seite her gepumpt wird. In diesem Beispiel wird eine sog. PM-Faser als polarisationserhaltende optische Faser verwendet, wobei dem Lasermedium 14 entweder ein elektro-optischer Modulator gemäss dem ersten Ausführungsbeispiel aus Fig. 1 oder eine akusto-optischer Modulator mit einer polarisationsändernden Komponente in einem der beiden winkelabhängig getrennten Strahlgänge gemäss dem dritten Ausführungsbeispiel aus Fig. 3 vorgeschaltet sein kann. Als Faser kann auch eine sog. "rod-type" bzw. stabförmige Faser oder eine sog. Photonische Kristallfaser oder Photonic Crystal Fiber verwendet werden, die noch höhere Single-Mode-Kerndurchmesser und somit noch höhere (Spitzen-) Leistungen ermöglicht.

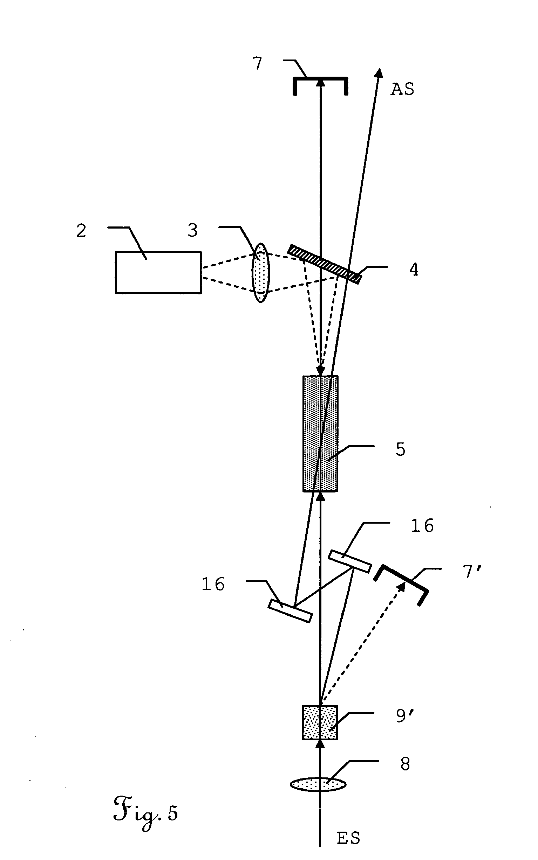

In Fig.5 erfolgt die schematische Darstellung eines fünften Ausführungsbeispiels der erfindungsgemässen Laserverstärkungsanordnung mit einem akusto-optischen Modulator mit drei Schaltzuständen als Schaltkomponente 9'. In diesem fünften Ausführungsbeispiel wird ähnlich wie im zweiten Ausführungsbeispiel gemäss Fig. 2 ein akusto-optischer Modulator verwendet, wobei dieser jedoch durch drei Schaltzustände mit zugeordneten Austrittswinkeln auch drei unterschiedliche Strahlgänge definiert. Während zwei Strahlgänge für das Nutz- und das Hintergrundsignal in einer zur Anordnung gemäss Fig. 2 analogen Weise Verwendung finden, wird der dritte Strahlgang - ohne dass dieser das Lasermedium 5 aufweist - direkt in eine optische Falle 7' geführt. Damit ist dieser Strahlgang gegenüber dem Lasermedium 5 optisch unterbrochen und führt nicht zu einer Verstärkung eines über diesen Pfad geführten Signals. Das Eingangssignal ES kann somit entweder als Nutzsignal oder Hintergrundsignal durch das Lasermedium 5 oder aber direkt in die optische Falle 7' geführt werden.

Zur Realisierung der drei Schaltzustände kann der akusto-optische Modulator als Schaltkomponente 9' mit zwei verschiedenen Frequenzen f₁ und f₂ angesteuert werden, wobei f₁ eine Ablenkung des Strahles in den ON-Zustand bzw. in das Nutzsignal bewirkt, und f₂ eine Ablenkung des Strahles in die optische Falle 7'. Damit existiert auch die Möglichkeit zur Erzeugung des bei Lösungen des Stands der Technik auftretenden Zustands einer vollständigen oder zumindest weitgehenden Inversion im Lasermedium 5. Dadurch wird es möglich, durch dieses gezielte Ablenken des Eingangssignals in die optische Falle 7' für eine Zeitdauer T, die gespeicherte Energie im Lasermedium 5 um einen Energiebetrag weiter zu erhöhen, der dem Produkt aus Zeitdauer und Pumpleistung im Lasermedium 5 entspricht, da während dieser Zeitdauer T kein Abruf der Inversion erfolgt. Das dem Produkt aus Zeitdauer und Pumpleistung ist jedenfalls für Zeitdauern, welche deutlich kürzer als die Lebensdauer des oberen Niveaus des Lasermediums sind, eine gute Annäherung, die bei Nd:Vanadat im 100 µs-Bereich, bei Yb:KYW bei 300 µs und bei Yb:YAG bei 1 ms liegt. Der erste Puls nach Ablauf von T, der dann gleich in das Nutzsignal geschaltet wird, trifft somit auf eine überhöhte Inversion und damit auch eine überhöhte Verstärkung, sodass die Energie dieses Pulses im Nutzstrahl entsprechend höher ist. In der Fig. 5 sind aus Darstellungsgründen ausser der Linse 8 keine weiteren Linsenelemente gezeigt; solche können aber je nach benötigtem Strahlradius entsprechend in den Strahlgang eingefügt werden.

Diese Anordnung verwirklicht somit einen Laserverstärker, der zwei Spezifikationensätze gleichzeitig realisieren kann:
(1) hochfrequente Pulsabfolge (z.B. im kHz bis MHz-Bereich) und hochfrequentes Schalten (d.h. Pulsabruf im MHz-Bereich) bei durchgehend hoher Sättigung des Verstärkers und ständiger Last einerseits, und
(2) niederfrequente Pulsabfolge (z.B. Hz bis kHz-Bereich) und niederfrequentes Schalten (d.h. Pulsabruf im kHz-Bereich) bei vergleichsweise hoher Inversion und Verstärkung andererseits.

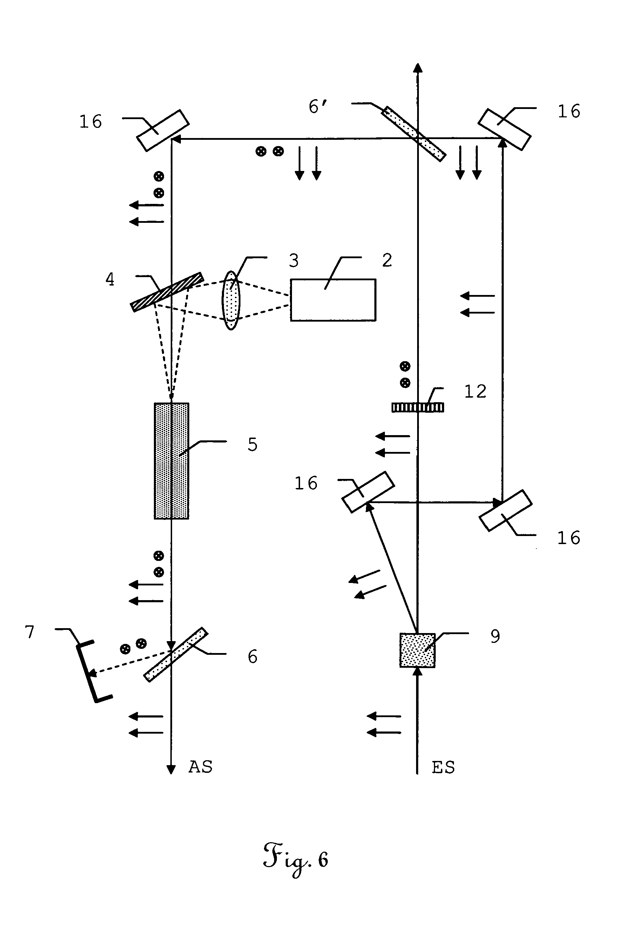

Fig.6 zeigt die schematische Darstellung eines sechsten Ausführungsbeispiels der erfindungsgemässen Laserverstärkungsanordnung mit einem kompakten Aufbau und einem zum dritten Ausführungsbeispiel korrespondierenden Schaltprinzip. Als Schaltkomponente 9 wird ebenfalls ein akusto-optischer Modulator mit nachgeordnetem Halbwellenlängenplättchen 12 verwendet, so dass eine Trennung von Nutz- und Hintergrundsignal anhand der Polarisation möglich ist. Allerdings erfolgt die Strahlführung für das Nutzsignal über eine Abfolge von Spiegeln 16 in gefalteter Weise, wobei nach einem Dünnfilmpolarisator 6' ein mit dem Hintergrundsignal überlagerter Strahlgang durch das Lasermedium 5 folgt.

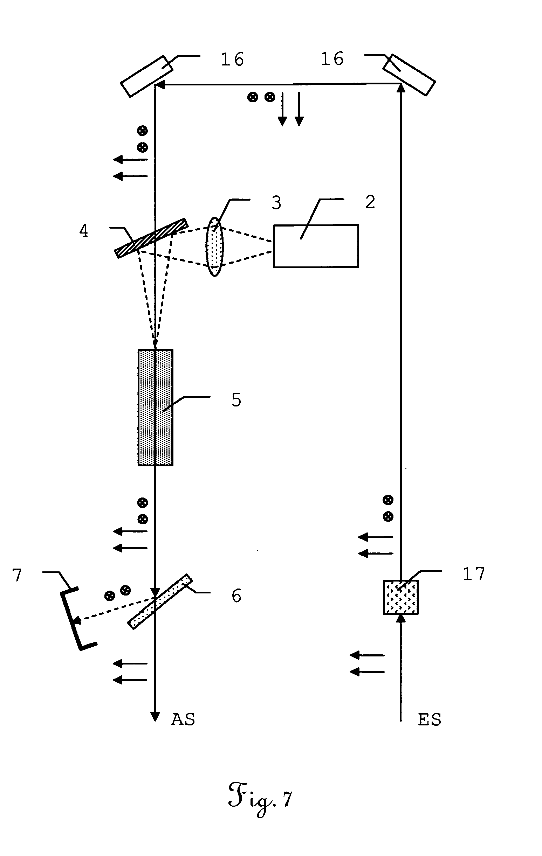

Eine weitere Alternative für eine Schaltkomponente 17 wird in Fig.7 als ein siebtes Ausführungsbeispiels der erfindungsgemässen Laserverstärkungsanordnung dargestellt. In einer zum sechsten Ausführungsbeispiel ähnlichen gefalteten und kompakten Strahlführung mit mehreren Spiegeln 16 wird als Schaltkomponente 17 ein kollinearer, akusto-optischer trennbarer Filter (Collinear Anisotropic AOTF) verwendet, so dass Nutzsignal und Hintergrundsignal unterschiedliche p- und s-Polarisationen aufweisen und entsprechend trennbar sind.

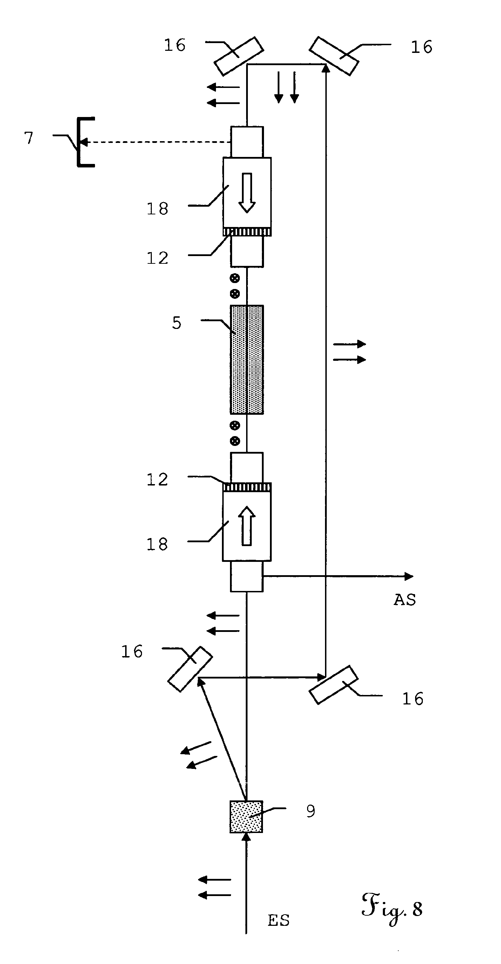

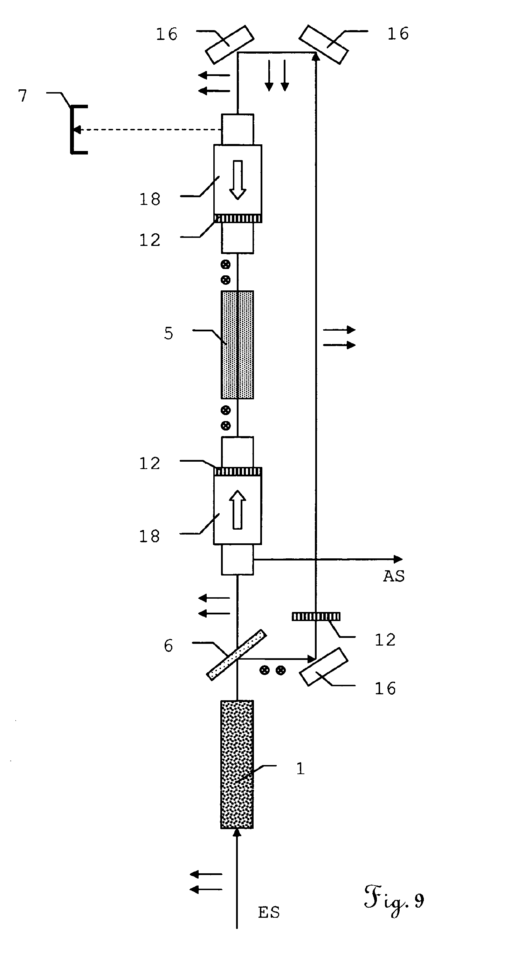

Die Fig.8 und Fig.9 zeigen ein achtes und neuntes Ausführungsbeispiel der erfindungsgemässen Laserverstärkungsanordnung bei denen jeweils eine Trennbarkeit der Signale durch ihre Strahlrichtung im Lasermedium 5 erfolgt. Hierzu werden Nutz- und Hintergrundsignal mit identischer Polarisation aber mit unterschiedlichen Richtungen über Faraday-Isolatoren 18 mit Halbwellenlängenplättchen 12 in das Lasermedium 5 geführt. Je nach Schaltzustand der Schaltkomponente und damit der Polarisationsrichtung wird das nunmehr als Nutzsignal dienende Eingangssignal ES nach seiner Verstärkung als Ausgangssignal AS aus der Anordnung ausgekoppelt oder aber bei anderer Polarisation als Hintergrundsignal in eine optische Falle 7 geführt. Das achte und neunte Ausführungsbeispiel unterscheiden sich hierbei in der Ausgestaltung des Schaltvorganges und der Schaltkomponenten. In beiden Fällen wird die Strahlung von Nutz- und Hintergrundsignal mit gleicher Polarisationsrichtung durch das Lasermedium 5 geführt, so dass unterschiedliche Sättigungen in anisotropen Medien von vorneherein vermieden werden.

So wird in Fig.8 als Schaltkomponente 9 ein akusto-optischer Modulator verwendet, dessen nullte Ordnung als erster Schaltzustand, z.B. für das Hintergrundsignal direkt über den Faraday-Isolator in das Lasermedium 5 und nachfolgend in die optische Falle 7 geführt wird. Im zweiten Schaltzustand wird der zugehörige Strahlgang des Nutzsignals über eine Folge von Spiegeln 16 von der entgegengesetzten Seite her über einen weiteren Faraday-Isolator 18 in das Lasermedium 5 und nachfolgend als Ausgangssignal AS aus der Laserverstärkungsanordnung heraus geführt.

Das in Fig.9 dargestellte neunte Ausführungsbeispiel der erfindungsgemässen Laserverstärkungsanordnung verwendet bei grundsätzlich gleichem Konzept der gegenläufigen Strahlrichtung von Nutz- und Hintergrundsignal im Lasermedium 5 hingegen einen elektro-optischen Modulator als Schaltkomponente 1. Dieser dreht beim Schalten die Polarisationsrichtung, so dass eine Trennung von Nutz- und Hintergrundsignal durch einen Dünnfilmpolarisator 6 möglich ist. Das durch das Drehen der Polarisationsrichtung geschaltete Nutzsignal muss nach beim Umlenken über eine Folge von Spiegeln 16 nochmals durch ein Halbwellenlängenplättchen 12 gedreht werden, so dass es mit einer zum Hintergrundsignal identischen Polarisationsrichtung durch das Lasermedium 5 geführt wird.

Sowohl in Fig.8 als auch in Fig.9 wurde lediglich aus Veranschaulichungsgründen die Pumpanordnung für das Lasermedium nicht dargestellt. Diese kann jedoch in zu den anderen Ausführungsformen analoger Weise in den Aufbau integriert werden.

Die Beispiele werden nur in schematischer Darstellung und zur Erläuterung der erfindungsgemässen Laserverstärkeranordnung gezeigt, so dass keine exakte und massstabgetreue Wiedergabe der Grössenverhältnisse, Abstände der Komponente oder Winkel erfolgt.

## Patentansprüche

1. Laserverstärkungsanordnung ausgebildet zur Verstärkung eines Eingangssignals, mit mindestens
- einem Lasermedium (5,5',5'',14) zur Erzeugung einer verstärkten Laseremission als Ausgangssignal (AS) aus einem zu verstärkenden Nutzsignal,
- einer Pumpquelle (2), insbesondere eine Laserdiodenquelle, zum Pumpen des Lasermediums (5,5',5",14),
- einer Schaltkomponente (1,9,9',17) zum Einkoppeln des Nutzsignals in das Lasermedium (5,5',5" ,14) aus einem ausgeschalteten Zustand der Verstärkungsfunktion für das Nutzsignal,
wobei das Lasermedium (5,5',5",14) und die Schaltkomponente (1,9,9',17) so ausgebildet und angeordnet sind, dass eine Aufteilung des Eingangssignals (ES) in das Nutzsignal und ein Hintergrundsignal zur Kontrolle der Inversion im Lasermedium (5,5',5",14) im ausgeschalteten Zustand der Verstärkungsfunktion durch Bewirken eines Sättigungszustands des Lasermediums zur Vermeidung einer Überhöhung eines ersten Pulses erfolgt, wobei
- das Hintergrundsignal zeitlich unmittelbar vor und/oder nach dem Einkoppeln des zu verstärkenden Nutzsignals durch das Lasermedium (5,5',5",14) geführt wird und
- das Ausgangssignal (AS) mit einer Durchschnittsleistung von mehr als 10 W, insbesondere mehr als 100 W, erzeugt wird und
- die Summe der Leistungen von Nutz- und Hintergrundsignal konstant ist,
**dadurch gekennzeichnet, dass**
- das Eingangs- und Ausgangssignal durch Femto- oder Pikosekundenpulse repräsentiert ist und
- die Summe der Leistungen von Nutz- und Hintergrundsignal der des Eingangssignals (ES) entspricht.

2. Laserverstärkungsanordnung nach Anspruch 1,
**dadurch gekennzeichnet, dass**
Lasermedium (5,5',5",14) und Schaltkomponente (1,9,9',17) so ausgebildet und angeordnet sind, dass durch das Hintergrundsignal ein Sättigungszustand des Lasermediums (5,5',5 ",14) bewirkt wird, wobei das Nutzsignal bei Vorliegen des Sättigungszustandes in das Lasermedium (5,5',5",14) eingekoppelt wird.

3. Laserverstärkungsanordnung nach Anspruch 1 oder 2,
dadurch gekenntzeichnet, dass
die Leistung des Eingangssignals (ES) entweder vollständig oder in einem Verhältnis zwischen Nutzsignal oder Hintergrundsignal hin- und herschaltbar ist.

4. Laserverstärkungsanordnung nach einem der vorangehenden Ansprüche,
**dadurch gekennzeichnet, dass**
Nutzsignal und Hintergrundsignal anhand von Austrittswinkel, Strahlrichtung im Lasermedium (5) oder Polarisation voneinander trennbar sind.

5. Laserverstärkungsanordnung nach einem der vorangehenden Ansprüche,
**dadurch gekennzeichnet, dass**
die Aufteilung des Eingangssignals (ES) durch die Schaltkomponente (1,9,9',17) erfolgt.

6. Laserverstärkungsanordnung nach Anspruch 5,
**dadurch gekennzeichnet, dass**
die Schaltkomponente (1,17)
- ein elektro-optischer Modulator,
- ein akusto-optischer Modulator, bei dem die nullte und die erste Ordnung unterschiedliche Polarisationen aufweisen, oder
- ein, insbesondere kollinearer, akusto-optischer trennbarer Filter ist,
wobei Nutzsignal und Hintergrundsignal anhand ihrer unterschiedlichen Polarisationen trennbar sind.

7. Laserverstärkungsanordnung nach Anspruch 6,
**dadurch gekennzeichnet, dass**
das Lasermedium (14) eine polarisationserhaltende optische Faser ist.

8. Laserverstärkungsanordnung nach Anspruch 6 oder 7,
**dadurch gekennzeichnet, dass**
die Polarisationsrichtungen von Nutzsignal und Hintergrundsignal im Lasermedium (5,5',5",14) so gewählt sind, dass beide Polarisationsrichtungen einer gleichen Sättigungseffekt bewirken.

9. Laserverstärkungsanordnung nach einem der Ansprüche 6 bis 8,
**dadurch gekennzeichnet, dass**
das Lasermedium (5',5") eine polarisationsabhängige Anisotropierichtung aufweist und aus wenigstens zwei Komponenten besteht, wobei
- die wenigstens zwei Komponenten (5a,5b) gegeneinander verdreht orientiert sind und/oder
- zwischen den wenigstens zwei Komponenten (5a) eine Verdrehung der Polarisationsrichtungen von Nutzsignal und Hintergrundsignal erfolgt.

10. Laserverstärkungsanordnung nach einem der Ansprüche 1 bis 5,
**dadurch gekennzeichnet, dass**
die Schaltkomponente (9,9')
- ein akusto-optischer Modulator oder
- ein elektro-optischer Deflektor
mit wenigstens zwei Schaltzuständen mit unterschiedlichen Austrittswinkeln ist, wobei die Schaltzustände jeweils dem Nutzsignal und dem Hintergrundsignal zugeordnet sind, insbesondere mit einem nachgeordnetem Halbwellenlängenplättchen (12) und einer Zusammenführung der Strahlgänge von Nutzsignal und Hintergrundsignal.

11. Laserverstärkungsanordnung nach Anspruch 10,
**dadurch gekennzeichnet, dass**
der akusto-optische Modulator (9`) oder der elektro-optische Deflektor drei Schaltzustände aufweist, wobei ein zu einem der drei Schaltzustände gehöriger Strahlgang gegenüber dem Lasermedium (5,5',5",14) optisch unterbrochen ist, insbesondere durch eine optische Falle (7,7').

12. Laserverstärkungsverfahren zur Verstärkung eines durch Femto- oder Pikosekundenpulse repräsentierten Eingangssignals (ES), mit mindestens
• optisches Pumpen eines Lasermediums (5,5',5",19),
• Einkoppeln eines zu verstärkenden Nutzsignals in das Lasermedium (5,5',5'',14) aus einem ausgeschalteten Zustand der Verstärkungsfunktion für das Nutzsignal,
• Erzeugen einer verstärkten Laseremission als Ausgangssignal (AS) durch das Lasermedium (5,5',5",14),
wobei
eine Aufteilung eines Eingangssignals (ES) in das Nutzsignal und ein Hintergrundsignal zur Kontrolle der Inversion in Lasermedium (5,5',5'',14) im ausgeschalteten Zustand der Verstärkungsfunktion durch Bewirken eines Sättigungszustands des Lasermediums zur Vermeidung einer Überhöhung eines ersten Pulses erfolgt, wobei
- die Summe der Leistungen von Nutz- und Hintergrundsignal konstant ist und der des Eingangssignals (ES) entspricht,
- das Hintergrundsignal zeitlich unmittelbar vor und/oder nach dem Einkoppeln des zu verstärkenden Nutzsignals durch das Lasermedium (5,5',5'',14) geführt wird und
- Femto- oder Pikosekundenpulse als das Ausgangssignal (AS) mit einer Durchschnittsleistung von mehr als 10 W, insbesondere mehr als 100 W, erzeugt werden.

13. Laserverstärkungsverfahren nach Anspruch 12,
**dadurch gekennzeichnet, dass**
durch das Hintergrundsignal ein Sättigungszustand des Lasermediums (5,5',5'',14) bewirkt wird, wobei das Nutzsignal bei Vorliegen des Sättigungszustandes in das Lasermedium (5,5',5'',14) eingekoppelt wird.

14. Laserverstärkungsverfahren nach Anspruch 12 oder 13,
**dadurch gekennzeichnet, dass**
die Leistung des Eingangssignals (ES) entweder vollständig oder in einem Verhältnis zwischen Nutzsignal oder Hintergrundsignal hin- und hergeschaltet wird.

15. Laserverstärkungsverfahren nach einem der Ansprüche 12 bis 14,
**dadurch gekennzeichnet, dass**
Nutzsignal und Hintergrundsignal anhand von Austrittswinkel, Strahlrichtung im Lasermedium (5) oder Polarisation voneinander getrennt werden.

## Claims

1. Laser amplification arrangement designed to amplify an input signal, having at least
- a laser medium (5, 5', 5", 14) for generating an amplified laser emission as output signal (AS) from a useful signal to be amplified,
- a pump source (2), in particular a laser diode source, for pumping the laser medium (5, 5', 5", 14), and
- a switching component (1, 9, 9', 17) for coupling the useful signal into the laser medium (5, 5', 5", 14) from a switched-off state of the amplification function for the useful signal,
the laser medium (5, 5', 5", 14) and the switching component (1, 9, 9', 17) being designed and arranged so that a division of the input signal (ES) into the useful signal and a background signal takes place in order to control the inversion in the laser medium (5, 5', 5", 14) in the switched-off state of the amplification function via effecting a saturation state of the laser medium to avoid overshooting of a first pulse,
- the background signal being passed through the laser medium (5, 5', 5", 14) at a time immediately before and/or after the coupling-in of the useful signal to be amplified, and
- the output signal (AS) being generated with an average power of more than 10 W, in particular more than 100 W, and
- the sum of the powers of the useful signal and background signal being constant,
**characterized in that**
- the input signal and output signal are represented by femtosecond pulses or picosecond pulses, and
- the sum of the powers of the useful signal and background signal corresponds to that of the input signal (ES).

2. Laser amplification arrangement according to Claim 1, **characterized in that** the laser medium (5, 5', 5", 14) and switching component (1, 9, 9', 17) are designed and arranged so that the background signal effects a saturation state of the laser medium (5, 5', 5", 14), the useful signal being coupled into the laser medium (5, 5', 5", 14) given the presence of the saturation state.

3. Laser amplification arrangement according to Claim 1 or 2, **characterized in that** the power of the input signal (ES) can be switched to and fro between the useful signal or background signal either fully or in a ratio.

4. Laser amplification arrangement according to any one of the preceding claims, **characterized in that** the useful signal and background signal can be separated from one another with the aid of the exit angle, beam direction in the laser medium (5) or polarization.

5. Laser amplification arrangement according to any one of the preceding claims, **characterized in that** the division of the input signal (ES) is performed by the switching component (1, 9, 9', 17).

6. Laser amplification arrangement according to Claim 5, **characterized in that** the switching component (1, 17) is
- an electro-optical modulator,
- an acousto-optical modulator in which the zeroth and the first order have different polarizations, or
- an, in particular collinear, acousto-optical separable filter,
the useful signal and background signal being separable with the aid of their different polarizations.

7. Laser amplification arrangement according to Claim 6, **characterized in that** the laser medium (14) is a polarization-maintaining optical fibre.

8. Laser amplification arrangement according to Claim 6 or 7, **characterized in that** the polarization directions of the useful signal and background signal in the laser medium (5, 5', 5", 14) are selected so that the two polarization directions result in the same saturation effect.

9. Laser amplification arrangement according to any one of Claims 6 to 8, **characterized in that** the laser medium (5', 5") has a polarization-dependent anisotropy direction and consists of at least two components,
- the at least two components (5a, 5b) being orientated in a fashion rotated relative to one another, and/or
- a rotation of the polarization directions of the useful signal and background signal taking place between the at least two components (5a).

10. Laser amplification arrangement according to any one of Claims 1 to 5, **characterized in that** the switching component (9, 9') is
- an acousto-optical modulator or
- an electro-optical deflector having at least two switching states with different exit angles, the switching states respectively being assigned to the useful signal and the background signal,
in particular having a downstream half-wavelength plate (12) and a combination of the beam paths of the useful signal and background signal.

11. Laser amplification arrangement according to Claim 10, **characterized in that** the acousto-optical modulator (9') or the electro-optical deflector has three switching states, a beam path belonging to one of the three switching states being optically interrupted with respect to the laser medium (5, 5', 5", 14), in particular by an optical trap (7, 7').

12. Laser amplification method for amplifying an input signal (ES) represented by femtosecond pulses or picosecond pulses, having at least
• optical pumping of a laser medium (5, 5', 5", 14),
• coupling a useful signal to be amplified into the laser medium (5, 5', 5", 14) from a switched-off state of the amplification function for the useful signal, and
• generating an amplified laser emission as output signal (AS) by the laser medium (5, 5', 5", 14),
in which a division of an input signal (ES) into the useful signal and a background signal takes place in order to control the inversion in the laser medium (5, 5', 5", 14) in the switched-off state of the amplification function via effecting a saturation state of the laser medium to avoid overshooting of a first pulse,
- the sum of the powers of the useful signal and background signal being constant and corresponding to that of the input signal (ES),
- the background signal being passed through the laser medium (5, 5', 5", 14) at a time immediately before and/or after the coupling-in of the useful signal to be amplified, and
- femtosecond pulses or picosecond pulses being generated as the output signal (AS) with an average power of more than 10 W, in particular more than 100 W.

13. Laser amplification method according to Claim 12, **characterized in that** the background signal effects a saturation state of the laser medium (5, 5', 5", 14), the useful signal being coupled into the laser medium (5, 5', 5", 14) given the presence of the saturation state.

14. Laser amplification method according to Claim 12 or 13, **characterized in that** the power of the input signal (ES) can be switched to and fro between the useful signal or background signal either fully or in a ratio.

15. Laser amplification method according to any one of Claims 12 to 14, **characterized in that** the useful signal and background signal can be separated from one another with the aid of the exit angle, beam direction in the laser medium (5) or polarization.

## Revendications

1. Dispositif d'amplification laser configuré pour amplifier un signal d'entrée avec au moins
- un agent laser (5, 5', 5", 14) pour produire une émission laser amplifiée comme signal de sortie (AS) à partir d'un signal utile à amplifier,
- une source de pompage (2), en particulier une source de diode laser, pour pomper l'agent laser (5, 5', 5", 14),
- un composant de commutation (11, 9, 9', 17) pour injecter le signal utile dans l'agent laser (5, 5', 5", 14) à partir d'un état arrêté de la fonction d'amplification pour le signal utile,
cependant que l'agent laser (5, 5', 5", 14) et le composant de commutation (11, 9, 9', 17) sont configurés et placés de telle manière qu'une répartition du signal d'entrée (ES) dans le signal utile et un signal de fond est effectuée pour le contrôle de l'inversion dans l'agent laser (5, 5', 5", 14) à l'état arrêté de la fonction d'amplification en provoquant un état de saturation de l'agent laser pour éviter un surhaussement d'une première impulsion, cependant que
- le signal de fond est guidé à travers l'agent laser (5, 5', 5", 14) dans le temps directement avant et/ou après l'injection du signal utile à amplifier et
- le signal de sortie (AS) est produit avec une puissance moyenne de plus de 10 W, en particulier de plus de 100 W, et
- la somme des puissances du signal utile et du signal de fond est constante **caractérisé en ce que**
- le signal d'entrée et le signal de sortie sont représentés par des impulsions femtosecondes ou picosecondes et
- la somme des puissances du signal utile et du signal de fond correspond à celle du signal d'entrée.

2. Dispositif d'amplification laser selon la revendication 1, **caractérisé en ce que** l'agent laser (5, 5', 5", 14) et le composant de commutation (11, 9, 9', 17) sont configurés et placés de telle manière qu'un état de saturation de l'agent laser (5, 5', 5", 14) est provoqué par le signal de fond, cependant que le signal utile est injecté dans l'agent laser (5, 5', 5", 14) en présence de l'état de saturation.

3. Dispositif d'amplification laser selon la revendication 1 ou 2, **caractérisé en ce que** la puissance du signal d'entrée (ES) peut être commutée en va-et-vient soit entièrement, soit dans un rapport entre le signal utile ou le signal de fond.

4. Dispositif d'amplification laser selon l'une des revendications précédentes, **caractérisé en ce que** le signal utile ou le signal de fond peuvent être séparés l'un de l'autre à l'aide de l'angle d'émergence, de la direction du faisceau dans l'agent laser (5) ou de la polarisation.

5. Dispositif d'amplification laser selon l'une des revendications précédentes, **caractérisé en ce que** la répartition du signal d'entrée (ES) se fait par le composant de commutation (1, 9, 9', 17).

6. Dispositif d'amplification laser selon la revendication 5, **caractérisé en ce que** le composant de commutation (1, 17) est
- un modulateur électro-optique,
- un modulateur acousto-optique pour lequel l'ordre zéro et le premier ordre présentent différentes modulations ou
- un filtre séparable, en particulier un filtre colinéaire acousto-optique, cependant que le signal utile ou le signal de fond sont séparables à l'aide de leurs différentes polarisations.

7. Dispositif d'amplification laser selon la revendication 6, **caractérisé en ce que** l'agent laser (14) est une fibre optique qui maintient la polarisation.

8. Dispositif d'amplification laser selon la revendication 6 ou 7, **caractérisé en ce que** les directions de polarisation du signal utile et du signal de fond dans l'agent laser (5, 5', 5", 14) sont choisies telles que les deux directions de polarisation provoquent un même effet de saturation.

9. Dispositif d'amplification laser selon l'une des revendications 6 à 8, **caractérisé en ce que** l'agent laser (5', 5") présente une direction d'anisotropie qui dépend de la polarisation et est constitué par au moins deux composants, cependant que
- les deux composants qui existent au moins (5a, 5b) sont orientés en étant tordus en sens opposé et/ou
- une torsion des directions de polarisation du signal utile et du signal de fond est effectuée entre les deux composants qui existent au moins (5a).

10. Dispositif d'amplification laser selon l'une des revendications 1 à 5, **caractérisé en ce que** le composant de commutation (9, 9') est
- un modulateur acousto-optique ou
- un déflecteur électro-optique
avec au moins deux états de commutation avec différents angles d'émergence, cependant que les états de commutation sont associés respectivement au signal utile et au signal de fond, en particulier avec une plaquette de longueur de demi-onde (12) et une jonction des trajectoires de faisceau du signal utile et du signal de fond.

11. Dispositif d'amplification laser selon la revendication 10, **caractérisé en ce que** le modulateur acousto-optique (9') ou le déflecteur électro-optique présente trois états de commutation, cependant qu'une trajectoire de faisceau qui appartient à l'un des trois états de commutation est interrompue optiquement par rapport à l'agent laser (5, 5', 5", 14), en particulier par un piège optique (7, 7').

12. Procédé d'amplification laser pour l'amplification d'un signal d'entrée (ES) représenté par des impulsions de femtosecondes ou de picosecondes avec au moins
• un pompage optique d'un agent laser (5, 5', 5", 14),
• une injection d'un signal utile à amplifier dans l'agent laser (5, 5', 5", 14) à partir d'un état arrêté de la fonction d'amplification pour le signal utile,
• production d'une émission laser amplifiée comme signal de sortie (AS) par l'agent laser (5, 5', 5", 14),
cependant qu'une répartition du signal d'entrée (ES) dans le signal utile et un signal de fond est effectuée pour le contrôle de l'inversion dans l'agent laser (5, 5', 5", 14) à l'état arrêté de la fonction d'amplification en provoquant un état de saturation de l'agent laser pour éviter un surhaussement d'une première impulsion, cependant que
- la somme des puissances du signal utile et du signal de fond est constante et correspond à celle du signal d'entrée (ES),
- le signal de fond est guidé à travers l'agent laser (5, 5', 5", 14) dans le temps directement avant et/ou après l'injection du signal utile à amplifier et
- des impulsions femtosecondes ou picosecondes sont produites en tant que signal de sortie (AS) avec une puissance moyenne de plus de 10 W, en particulier de plus de 100 W.

13. Procédé d'amplification laser selon la revendication 12, **caractérisé en ce qu'**un état de saturation de l'agent laser (5, 5', 5", 14) est provoqué par le signal de fond, cependant que le signal utile est injecté dans l'agent laser (5, 5', 5", 14) en présence de l'état de saturation.

14. Procédé d'amplification laser selon la revendication 12 ou 13, **caractérisé en ce que** la puissance du signal d'entrée (ES) peut être commutée en va-et-vient soit entièrement, soit dans un rapport entre le signal utile ou le signal de fond.

15. Procédé d'amplification laser selon l'une des revendications 12 à 14, **caractérisé en ce que** le signal utile ou le signal de fond sont séparés l'un de l'autre à l'aide de l'angle d'émergence, de la direction du faisceau dans l'agent laser (5) ou de la polarisation.
